# EUROPÄISCHE PATENTSCHRIFT

(11) **EP 0 703 855 B1**
(45) Veröffentlichungstag und Bekanntmachung des Hinweises auf die Patenterteilung: **02.09.1998**
(21) Anmeldenummer: 94920955.5
(22) Anmeldetag: 17.06.1994
(51) Int. Cl.: B29C 70/10, E04D 5/10

(54) **PLASTISCH VERFORMBARES FLÄCHIGES GEBILDE UND VERFAHREN ZU DEREN HERSTELLUNG**
PLASTICALLY DEFORMABLE FLAT PRODUCT AND METHOD FOR MANUFACTURING SAME
PRODUIT PLAT PLASTIQUEMENT DEFORMABLE ET PROCEDE POUR SA FABRICATION

(30) Priorität: 17.06.1993 DE 4319993
(43) Veröffentlichungstag der Anmeldung: 03.04.1996
(73) Patentinhaber: Klöber, Johannes, D-58242 Ennepetal (DE)
(72) Erfinder: Kronenberg, Bernd, D-41844 Wegberg (DE)
(74) Vertreter: Grundmann, Dirk, Dr.
(86) Internationale Anmeldenummer: EP9401986
(87) Internationale Veröffentlichungsnummer: WO9500317

(56) Entgegenhaltungen:
- EP-A- 0 109 505
- EP-A- 0 123 141
- DE-A- 3 821 172
- GB-A- 2 184 685
- US-A- 4 248 926

## Beschreibung

Die Erfindung betrifft eine Abdichtfolie gemäß Gattungsbegriff des Anspruches 1 und ein Herstellungsverfahren für diese Folie. Eine gattungsgemäße Abdeckfolie ist aus der europäischen Patentanmeldung 0 123 141 her bekannt. Zur Abdichtung insbesondere von Dachanschlüssen ist dort ein plattenförmiges Abdichtmaterial vorgesehen, das aus mindestens einer Elastomerschicht mit einer modulierbaren, metallischen Drahteinlage in Form eines Drahtgeflechtes besteht und somit dreidimensional verformbar ist.

Aus der Offenlegungsschrift 38 21 172 ist eine Mehrschicht-Kunststoffverbundplatte vorbekannt, in der eine Fadeneinlage eingearbeitet ist, die eine räumliche Verformung der Platte gestattet.

Aus der DE 01 09 505 ist eine drahtarmierte Folie zur Abschirmung elektromagnetischer Wellen her bekannt. Aus der Patentschrift 36 42 063 ist ein Abdeckmaterial bekannt, bei dem die Metalleinlage ein Streckmetallgitter ist. Diese Streckmetallfolie läßt sich in einer Richtung im Bereich von 50-150% dehnen.

Der Erfindung liegt daher die Aufgabe zugrunde, eine gattungsgemäße Folie anzugeben, die ähnlich einer Bleifolie oder dergleichen, jedoch in größerem Maße bei geringerem Risiko eines Zerreißens verformbar ist, insbesondere zum Einsatz als Bleiersatz in der Dachabdichtung weiterzubilden.

Gelöst wird die Aufgabe durch die in den Ansprüchen 1 und 2 angegebene Erfindung. Der Anspruch 13 beschreibt ein Verfahren zur Herstellung einer erfindungsgemäßen Folie.

Bevorzugte Ausführungen der Erfindung sind in den abhängigen Ansprüchen definiert.

Zufolge der erfindungsgemäßen Ausbildung ist eine drahtgitterförmige Bewehrung gegeben, wobei die Gitterelemente sich in beiden Richtungen, insbesondere unter Vergrößerung der Maschen, verformen können. Das Gitter kann durch im wesentlichen linienförmige Bewehrungselemente ausgebildet sein, welche aus in sich gekrümmtem Drahtmaterial bestehen. Hierdurch ist eine hohe plastische Verformbarkeit in jeder Richtung gewährleistet, ohne daß mit einer Längsdehnung eine wesentliche Querkontraktion einhergeht. Die plastische Verformung wird im wesentlichen durch eine Aufbiegung der Auskrümmungen des Drahtmaterials bewirkt. Eine Streckung, verbunden mit einer Materialschwächung des einzelnen, bevorzugt metallischen Drahtes tritt, wenn überhaupt, nur untergeordnet auf. Um diese Auskrümmungen weg von der Erstreckungsrichtung des linienförmigen Bewehrungselementes zu realisieren, ist die Länge des Drahtes selbst wesentlich größer als die Länge des linienförmigen Bewehrungselementes insgesamt. Das Gitter besteht bevorzugt aus einer Vielzahl, von sich kreuzenden Einzeldrähten, die nicht miteinander verbunden sind. An den Kreuzungspunkten können die Einzeldrähte lose aufeinander aufliegen, oder aber auch durch eine elastische Zwischenschicht aus der klassisch verformbaren Masse getrennt sein. Sind die Auskrümmungen derart ausgebildet, daß die Drahtlänge insgesamt mehr als das Doppelte der Länge des linienförmigen Bewehrungselementes beträgt, so ist eine Dehnung des Gebildes in einer Richtung von mehr als 100% gegeben, ohne daß eine schädigende Materialschwächung des Drahtes auftritt. Es hat sich gezeigt, daß insbesondere dann, wenn die Auskrümmungen die Form einer Wellenstruktur aufweisen, die Deformationen in einem gewissen Umfang sogar plastisch rückstellbar sind. Als Kunststoffmaterial, in welcher Masse die sich kreuzenden linienförmigen Bewehrungselemente angeordnet sein können, hat sich bevorzugt eine Acryldispersion bewährt. Eine solche Acryldispersion kann eine Dehnfähigkeit von 300% oder mehr aufweisen. Die Metalleinlage besteht bevorzugt aus Aluminiumdraht, welcher, wenn er weichgeglüht ist, eine sehr hohe plastische Verbiegbarkeit aufweist. Ein derartiges flächiges Gebilde weist eine sehr hohe örtliche Verformbarkeit auf. Es ist bevorzugt vorgesehen, daß die Erstreckung jeder Auskrümmung in etwa dem Abstand der im wesentlichen parallel laufenden Bewehrungselemente entspricht. Die Bewehrungselemente können schichtweise übereinanderliegen, wobei die Bewehrungselemente jeder Schicht parallel zueinander angeordnet sind und die von benachbarten Schichten sich kreuzen. Die Schichten sind in dem hochplastischen Kunststoffmaterial eingebettet und können so eine Sandwich-Struktur aufweisen. Bevorzugt beträgt die Wellenlänge, das heißt der Abstand zweier Wellenberge bzw. Wellentäler, 0,5 cm. Der Abstand zweier parallel laufender Drähte beträgt ebenfalls etwa 0,5 cm. Die Erstreckung der Auskrümmung, bei einer wellenartigen Struktur ist dies die Querbeabstandung von Wellenberg zu Wellental, beträgt bevorzugt 2 bis 3 mm, also die Hälfte der Wellenlänge. Bevorzugt liegen die Auskrümmungen in der Ebene des flächigen Gebildes. Hierdurch hat das flächige Gebilde insgesamt eine geringe Dicke. Die Auskrümmungen können aber auch dreidimensional sein. Die Folie kann eine im wesentlichen geschlossene Oberfläche aufweisen, wobei die die Folie ausbildende Masse in gewissem Grade fließfähig sein kann. Eine erhöhte Reißfestigkeit ergibt sich durch die Einlage eines reißfesten, hochelastischen Textilgewirkes ("Lycra") in die Kunststoffmasse. Das Drahtmaterial hat bevorzugt einen runden Querschnitt und einen Durchmesser von 0,8 bis 0,9 mm, bevorzugt 0,85 mm. Die Radien der Auskrümmungen können etwa das 2 bis 4fache des Drahtdurchmessers betragen. Das Gebilde ist um enge Radien rückstellbar biegbar, daß heißt plastisch knetbar und 2 bis 3 mm dick. Die Anwendung dieser Folie ist nicht nur auf die Dachabdichtung beschränkt, sondern sie läßt sich überall dort einsetzen, wo Wölbungen oder dergleichen dargestellt werden müssen, bspw. im Modellbau. Zur Herstellung des gewellten Drahtmaterials wird ein Aluminiumdraht durch zwei mit Spiel zueinanderer, sich kämmende Zahnräder bzw. -walzen hindurchgeführt. Die Größe der Ausprägungen wird dabei von dem Modul der Verzahnung bestimmt. Die Herstellung der Folie erfolgt bevorzugt dadurch, daß auf einen Teflonuntergrund oder eine andere gut trennbare Oberfläche eine hochelastische Kunststoffdispersion aufgespritzt wird. Auf diese Kunststoffdispersionsschicht werden dann im wesentlichen parallel zueinander gewellte Einzeldrähte aufgelegt. Aufgrund der klebrigen Eigenschaften der Dispersionsschicht haften die Einzeldrähte auf der Schichtoberfläche und sind dort fixiert. Zum Auftragen und Anhaften der Metallbewehrung empfiehlt sich eine Walze. Auf diese erste Drahteinlage kann dann eine weitere Dispersionsschicht aufgespritzt werden, auf welche dann in ähnlichem Verfahren eine zweite Drahteinlage aufgebracht wird. Die zweite Drahteinlage unterscheidet sich von der ersten Drahteinlage im wesentlichen nur durch ihre um 90° verdrehte Orientierung. Die zwischen den beiden Drahteinlagen angeordnete Kunststoffschicht ist von Vorteil, da hierdurch eine Haftverbindung zwischen den beiden Drahteinlagen erzeugt wird, ohne daß die Drahtelemente selbst miteinander verbunden sind. Vermöge der plastischen Verformbarkeit des Kunststoffmaterials können die Bewehrungselemente sich gegeneinander verlagern. Auf diese zweite Drahteinlage wird dann eine dritte Dispersionsschicht aufgetragen, so daß die Folie insgesamt eine Sandwichstruktur aufweist. Die Kunststoffdispersionsschichten haben bevorzugt die Eigenschaft, beim Auftragen miteinander zu verschweißen. Hierdurch wird eine quasi materialeinheitliche Masseneinbettung der Drahteinlage erzeugt, die eine gitterförmige Anordnung aufweist, ohne daß sich die Armierungsdraht-Abschnitte an den Gitterkreuzungspunkten berühren.

Nachfolgend wird anhand von beigefügten Zeichnungen ein Ausführungsbeispiel der Erfindung erläutert.

Es zeigen:
- Fig. 1: ein flächiges Gebilde ohne größere lokale Verformungen, teilweise aufgebrochen,
- Fig. 2: eine Darstellung der kreuzweise angeordneten linearen Bewehrungselemente,
- Fig. 3: eine Darstellung gemäß Fig. 1 mit einer kuppelartigen lokalen Verformung,
- Fig. 4: einen Schnitt durch ein Ausführungsbeispiel der Erfindung.

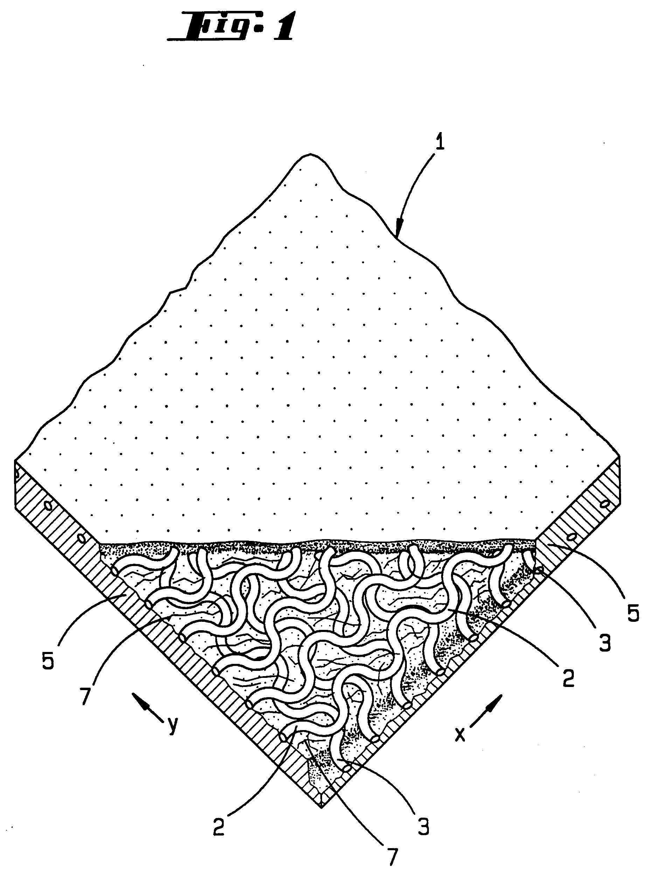

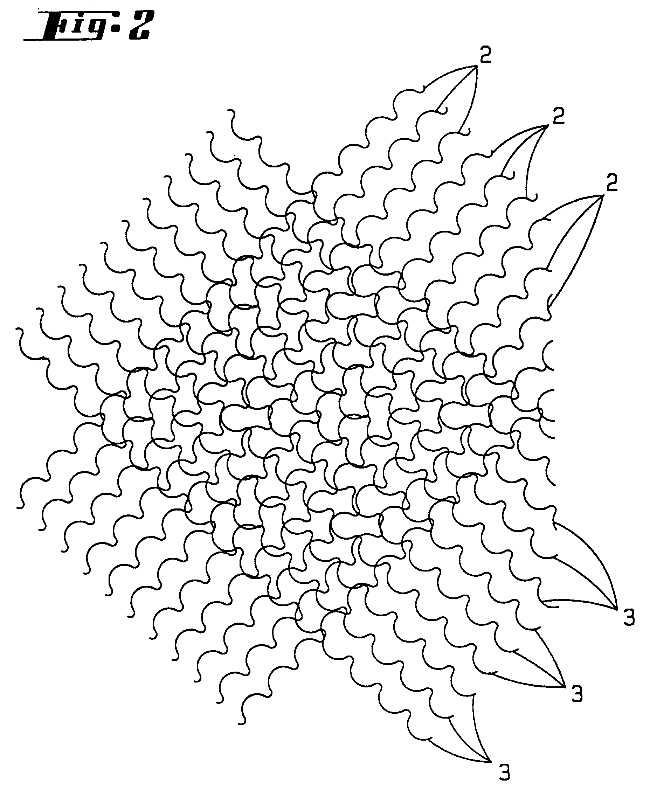

Das in den Fig. 1 bis 4 dargestellte flächige Gebilde ist mit der Bezugsziffer 1 bezeichnet. Wie in Fig. 2 dargestellt, besteht die Bewehrung aus einer Vielzahl parallel zueinander verlaufender, im wesentlichen linearer Bewehrungselemente. Die Bewehrungselemente sind in zwei Schichten zugeordnet. Die Bewehrungselemente 2 sind einer ersten Schicht zugeordnet und die Bewehrungselemente 3 einer zweiten Schicht. Innerhalb der Schicht liegen die Bewehrungselemente parallel zueinander, die Bewehrungselemente der ersten Schicht liegen gegenüber den Bewehrungselementen der zweiten Schicht in einem Winkel von etwa 90°. Jedes lineare Bewehrungselement wird von einem Drahtkörper ausgebildet, welcher im wesentlichen quer zur Erstreckungsrichtung sich erstreckende Auskrümmungen ausbildet.

Im Ausführungsbeispiel haben die Auskrümmungen eine im wesentlichen wellenartige Struktur. Die Wellen sind so ausgebildet, daß durch eine Aufbiegung der Auskrümmungen eine Dehnbarkeit von mindesten 70% des Bewehrungselementes erzielt wird, ohne daß eine Streckung des Drahtes selbst erfolgen muß. Die Dehnung des Bewehrungselementes erfolgt also in erster Linie durch eine Aufbiegung der Struktur und erst untergeordnet oder gar nicht durch eine Streckung des Drahtes. Die Auskrümmungen bilden einen ungradlinigen Verlauf der Armierungsdraht-Abschnitte zwischen den Kreuzungspunkten zweier Drähte 2, 3. Durch diesen ungradlinigen Verlauf ist die Länge des Drahtabschnittes zwischen zwei Gitterpunkten länger als der Abstand der beiden Gitterpunkte. Im Ausführungsbeispiel ist diese wellenartige Struktur zweidimensional. Es sind aber auch andere Auskrümmungen denkbar, beispielsweise kann der Draht wendelförmig gelegt sein. Wesentlich ist bspw., daß auf die Länge des Bewehrungselementes genügend Auskrümmungen entfallen, so daß eine lokale Deformierbarkeit möglich ist. Relativ kleine Auskrümmungen, die dicht aufeinander folgend angeordnet sind, bieten daher großen Vorteil.

Die netzartig aufeinander und nebeneinander liegenden Bewehrungselemente sind durch eine Einbettung in eine stark plastisch verformbare Kunststoffmasse gebunden. Die Kunststoffmasse besteht aus einer Acryldispersion und hat mindestens 300% Dehnfähigkeit. Der Abstand der einzelnen Bewehrungselemente beträgt etwa 0,5 cm. Die Wellenlänge beträgt ebenfalls etwa 0,5 cm und die Querbeabstandung von Wellental zu Wellenberg entspricht etwa der Hälfte der Wellenlänge bzw. der Hälfte des mittleren Abstandes zweier benachbarter Bewehrungselemente 3 oder 2.

Die Bewehrungselemente 2 bzw. 3 liegen im Ausführungsbeispiel nahezu rechtwinklig aufeinander, das heißt die Bewehrungselemente 2 erstrecken sich im wesentlichen in einer Richtung X und die Bewehrungselemente 3 im wesentlichen in einer Richtung Y. Parallelität zwischen zwei Bewehrungselementen kann dabei auch bedeuten, daß diese sich schneiden. Wesentlich ist nur, daß insgesamt im Mittel alle Bewehrungselemente einer Schicht nebeneinander liegen und in einer Richtung verlaufen, während die Bewehrungselemente einer anderen Schicht die Bewehrungselemente der ersten Schicht kreuzen. Die Schichten brauchen dabei nicht unbedingt übereinander zu liegen, es ist auch vorgesehen, daß die Bewehrungselemente zweier Schichten miteinander verwebt sind.

Im Ausführungsbeispiel sind zwei Schichten 2 und 3 dargestellt, die von der Kunststoffmasse 5 aufgenommen werden. Es können aber auch noch mehrere andere zusätzliche Schichten vorgesehen sein, die ebenfalls in der Kunststoffmasse 5 Aufnahme finden und übereinander sandwichartig angeordnet sind.

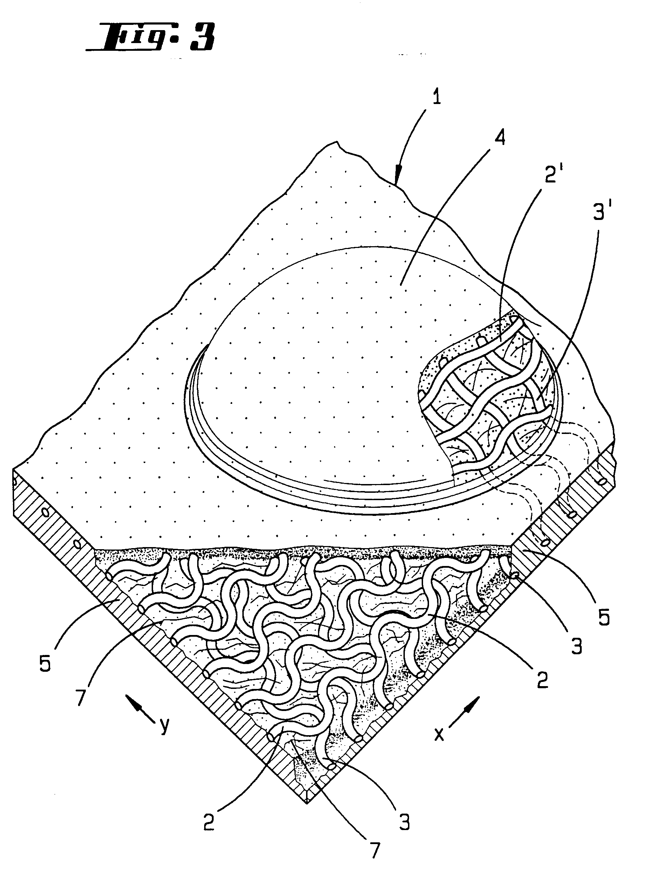

In Fig. 3 ist eine lokale Ausformung 4 dargestellt. Die Abschnitte 2' bzw. 3' der wellenförmigen Bewehrungselemente 2 bzw. 3 weisen in diesem Bereich eine gestrecktere Form auf. Die wellenförmige Struktur der Bewehrungselemente 2', 3' ist hier nicht mehr so stark ausgeprägt, sondern aufgebogen. Durch diese Aufbiegung der Wellenstruktur entsteht insgesamt eine lokale Verlängerung des jeweiligen Bewehrungselementes 2 bzw. 3.

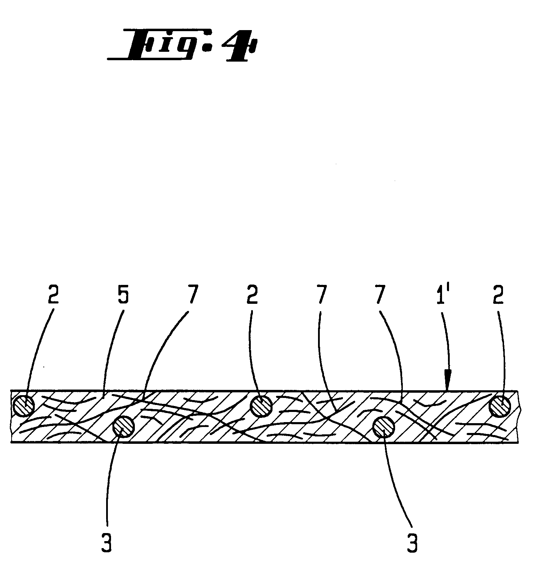

Im Ausführungsbeispiel ist, wie insbesondere in Fig. 4 dargestellt ist, zusätzlich zu den aus Aluminium bestehenden Bewehrungselementen 2 bzw. 3 ein Textilgewirk (angedeutet mit der Bezugsziffer 7) in der Kunststoffmasse 5 angeordnet. Als Textilgewirk 7 kommt ein unter dem Warenzeichen "Lycra" bezeichnetes Material in Frage. Das Textilgewirk 7 gibt der Struktur eine größere Festigkeit. Das Textilgewirk 7 ist reißfest und hochelastisch. Das in Fig. 4 dargestellte Ausführungsbeispiel der Folie ist mit der Bezugsziffer 1' versehen.

Das Anwendungsgebiet dieser Erfindung liegt bevorzugt bei der Dachabdeckung. Das Material ist besonders dafür geeignet, die bislang zur Abdichtung verwendeten Bleifolien bzw. Bleiplatten zu ersetzen. Das erfindungsgemäße Gebilde zeichnet sich durch eine Dehnbarkeit von mindestens 70% sowohl in Längs- als auch in Querrichtung aus. Dies ermöglicht insbesondere etwa halbkugelförmige Verformungen, wie sie in Fig. 3 dargestellt sind. Eine derartige Verformungen könne eine Dehnbarkeit des Materials erlangen, die 100% bis 165% beträgt, auch diese Dehnbarkeiten können von dem Gebilde erreicht werden. Entsprechend dieser Anforderung müssen die Auskrümmungen der linienförmigen Bewehrungselemente ausgebildet sein.

Die wellenartige Struktur der Bewehrungselemente 2 oder 3 wird bevorzugt durch Walzen erzeugt. Dabei wird ein zunächst geradliniger Aluminiumdraht durch zwei sich kämmende Zahnräder schräg hindurchgeführt, wobei die Verzahnung der Walzen dem Draht die Wellenform aufprägt. Eine Vielzahl dieser wellenförmigen Drahtelemente wird parallel zueinander auf eine, auf einen Teflongrund aufgespritzte Dispersionsschicht aufgelegt bzw. aufgewalzt. Auf diese erste Drahtschicht wird eine zweite Kunststoffdispersionsschicht aufgespritzt, die mit der ersten Schicht materialeinheitlich verschmilzt. Eine quer zur ersten Drahteinlage orientierte zweite Drahteinlage wird in gleicher Weise auf die zweite Dispersionsschicht aufgetragen. Hierdurch entsteht eine im wesentlichen gitterförmige Drahtarmierung, wobei sich die einzelnen Drahtelemente an den Gitterkreuzungspunkten nicht berühren, sondern durch eine Kunststoffdispersionsschicht beabstandet sind. Auf diese zweite Drahtschicht wird eine dritte Kunststoffdispersionsschicht aufgespritzt, die ebenfalls mit dem übrigen Kunststoffmaterial verschmilzt. Auf die mittlere Kunstoffschicht kann aber ggf. auch verzichtet werden, dann liegt an den Gitterpunkten Draht auf Draht.

Zur Herstellung der erfindungsgemäßen Folie bietet sich auch noch ein weiteres Verfahren an, bei dem ein gewellter Draht in großen zick-zack- Strukturen auf eine erste Kunststoffschicht aufgetragen wird. Werden mehrere solcher zick-zack- Strukturen mit Abstand zueinander aufgelegt, so entsteht insgesamt eine gitterförmige Anordnung von Drahtelementen. Die Größe der zick-zack-Struktur beträgt dabei ein Vielfaches der Maschengröße des Gitters. Bei dieser Art der Herstellung ergeben sich keine zwei getrennt aufeinanderliegende Gittereinlagen mit jeweils einheitlicher Orientierung. Die einzelnen Bewehrungselemente sind vielmehr durch diese Art der Herstellung quasi miteinander verwoben. Auch bei dieser Art der Herstellung kann vorgesehen sein, daß zwischen den einzelnen zick-zack-Lagen dünne Dispersionsschichten aufgetragen werden.

## Patentansprüche

1. Abdichtfolie (1) für Dachanschlüsse, Dachgrate, -firste, Schornsteinabdeckungen oder dergleichen, mit zwischen einer ersten und einer zweiten plastisch verformbaren Schicht (5), insbesondere Kunststoffdispersionsschicht eingebetteter Einlage aus sich kreuzenden, quer zueinander verlaufenden Bewehrungselementen aus einem weichen Drahtmaterial, dadurch gekennzeichnet, daß die Einlage zwei übereinanderliegende, quer zueinander ausgerichtete Schichten (2, 3) von im wesentlichen parallel orientierten Auskrümmungen weg von der Erstreckungsrichtung aufweisenden Bewehrungselementen ausbildet.

2. Abdichtfolie (1) für Dachanschlüsse, Dachgrate, -firste, Schornsteinabdeckungen oder dergleichen, mit zwischen einer ersten und einer zweiten plastisch verformbaren Schicht (5) insbesondere Kunststoffdispersionsschicht eingebetteter Einlage aus sich kreuzenden, quer zueinander verlaufenden Bewehrungselementen aus einem weichen Drahtmaterial, dadurch gekennzeichnet, daß die zwischen den Gitterkreuzungspunkten verlaufenden Drahtabschnitte der Einlage Auskrümmungen weg von der Erstreckungsrichtung der Bewehrungselemente (2, 3) aufweisen, so daß die Länge des Drahtabschnittes zwischen zwei Gitterkreuzungspunkten größer ist als der Abstand der beiden Gitterpunkte und die Folie dadurch um mindestens 70% dehnbar ist.

3. Folie nach Anspruch 1 oder 2, dadurch gekennzeichnet, daß die Armierungsdraht-Abschnitte der sich kreuzenden Bewehrungselemente (2, 3) an den Gitterkreuzungspunkten in loser Aufeinanderlage angeordnet sind.

4. Folie nach einem oder mehreren der vorhergehenden Ansprüche, dadurch gekennzeichnet, daß die Armierungsdraht-Abschnitte von sich kreuzenden Bewehrungselementen (2, 3) an den Gitterkreuzungspunkten durch eine Zwischenlage der plastisch verformbaren Masse (5) getrennt sind.

5. Folie nach einem oder mehreren der vorhergehenden Ansprüche, dadurch gekennzeichnet, daß die Auskrümmungen eine im wesentlichen wellenförmige Struktur aufweisen.

6. Folie nach einem oder mehreren der vorhergehenden Ansprüche, dadurch gekennzeichnet, daß die plastisch verformbare Masse (5) ein Kunststoffmaterial ist, bevorzugt eine Acryldispersion mit mindestens 300% Dehnfähigkeit.

7. Folie nach einem oder mehreren der vorhergehenden Ansprüche, dadurch gekennzeichnet, daß die linienförmigen Bewehrungselemente (2, 3) aus einem weichen Aluminiumdraht bestehen, bevorzugt mit einem Durchmesser von 0,8 bis 0,9 bevorzugt 0,85mm.

8. Folie nach einem oder mehreren der vorhergehenden Ansprüche, dadurch gekennzeichnet, daß die Beabstandung der einzelnen Auskrümmungen in etwa dem Abstand der Bewehrungselemente (2, 3) entspricht.

9. Folie nach einem oder mehreren der vorhergehenden Ansprüche, dadurch gekennzeichnet, daß die Quererstreckung der Auskrümmung in etwa der Hälfte der Längserstreckung der Auskrümmung entspricht.

10. Folie nach einem oder mehreren der vorhergehenden Ansprüche, gekennzeichnet durch eine sandwichartige Struktur mit außenliegender Kunststoffoberfläche des flächigen Gebildes (1).

11. Folie nach einem oder mehreren der vorhergehenden Ansprüche, dadurch gekennzeichnet, daß die Auskrümmungen in der Ebene des flächigen Gebilde angeordnet sind.

12. Folie nach einem oder mehreren der vorhergehenden Ansprüche, dadurch gekennzeichnet, daß die Dicke des Gebildes 2 bis 3mm, bevorzugt 2,3mm beträgt.

13. Verfahren zur Herstellung einer Folie gemäß den Ansprüche 1-12, dadurch gekennzeichnet, daß auf eine nichthaftende Unterlage eine hochelastische Kunststoffdispersionsschicht (5) aufgespritzt wird, auf welche eine erste Schicht von, im wesentlichen paralellel orientierten, Auskrümmungen weg von der Erstreckungsrichtung aufweisenden Bewehrungselementen (2) aus weichem Drahtmaterial aufgebracht wird, auf welche eine zweite Dispersionsschicht aufgespritzt wird, und/oder auf welche eine weitere zweite, quer zur ersten Bewehrungseinlage (2) orientierte Bewehrungseinlage aus weichem Drahtmaterial aufgebracht wird, welche von einer Kunststoffdispersionsschicht überdeckt wird.

14. Verfahren zur Herstellung einer Folie nach Anspruch 13, dadurch gekennzeichnet, daß die Bewehrungselemente (2,3) zick-zack-förmig auf einer Kunststoffdispersionsschicht aufgebracht werden, welche von einer weiteren Kunststoffdispersionsschicht überdeckt werden.

## Claims

1. Sealing sheet (1) for roof connections, roof arrises, roof ridges, chimney covers or the like, with an inlay of intersecting reinforcing elements of a soft wire material extending transversely to each other, said inlay being embedded between first and second plastically deformable layers (5), in particular plastic dispersion layers, characterised in that the inlay forms two layers (2, 3) located one above the other and oriented transversely to each other, of essentially parallel-oriented reinforcing elements having outward curvatures away from the direction of extent.

2. Sealing sheet (1) for roof connections, roof arrises, roof ridges, chimney covers or the like, with an inlay of intersecting reinforcing elements of a soft wire material extending transversely to each other, said inlay being embedded between first and second plastically deformable layers (5), in particular plastic dispersion layers, characterised in that the wire sections of the inlay extending between the grid intersection points have outward curvatures away from the direction of extent of the reinforcing elements (2, 3), so that the length of the wire section between two grid intersection points is greater than the distance between the two grid points and the sheet is thus expandable by at least 100%.

3. Sheet according to claim 1 or 2, characterised in that the reinforcing wire sections of the intersecting reinforcing elements (2, 3) at the grid intersection points are arranged loosely one above the other.

4. Sheet according to one or more of the preceding claims, characterised in that the reinforcing wire sections of intersecting reinforcing elements (2, 3) at the grid intersection points are separated by an intermediate layer of the plastically deformable compound (5).

5. Sheet according to one or more of the preceding claims, characterised in that the outward curvatures have an essentially undulating structure.

6. Sheet according to one or more of the preceding claims, characterised in that the plastically deformable compound (5) is a plastic material, preferably an acrylic dispersion with an expansion capacity of at least 300%.

7. Sheet according to one or more of the preceding claims, characterised in that the linear reinforcing elements (2, 3) are made of a soft aluminium wire, preferably with a diameter from 0.8 to 0.9, preferably 0.85 mm.

8. Sheet according to one or more of the preceding claims, characterised in that the spacing between the individual outward curvatures roughly corresponds to the distance between the reinforcing elements (2, 3).

9. Sheet according to one or more of the preceding claims, characterised in that the transverse extent of the outward curvature roughly corresponds to half the longitudinal extent of the outward curvature.

10. Sheet according to one or more of the preceding claims, characterised by a sandwich-like structure with the plastic surface of the two-dimensional formation (1) on the outside.

11. Sheet according to one or more of the preceding claims, characterised in that the outward curvatures are arranged in the plane of the two-dimensional formation.

12. Sheet according to one or more of the preceding claims, characterised in that the thickness of the formation is 2 to 3 mm, preferably 2.3 mm.

13. Method for the manufacture of a sheet according to claims 1-12, characterised in that onto a non-adhesive substrate is sprayed a highly elastic plastic dispersion layer (5) to which is applied a first layer of essentially parallel-oriented reinforcing elements (2) of soft wire material having outward curvatures away from the direction of extent, onto which is sprayed a second dispersion layer, and/or to which is applied a further second reinforcing inlay of soft wire material which is oriented transversely to the first reinforcing inlay (2) and which is covered by a plastic dispersion layer.

14. Method for the manufacture of a sheet according to claim 13, characterised in that the reinforcing elements (2, 3) are applied in a zigzag shape to a plastic dispersion layer and covered by a further plastic dispersion layer.

## Revendications

1. Feuille d'étanchéité (1) pour des raccords de toitures, des arêtiers de toiture, des recouvrements de faîtes, de cheminées ou similaires, comportant entre une première et deuxième couche plastiquement déformables (5), en particulier une couche de dispersion en matière plastique, un insert noyé constitué d'éléments de renforcement se croisant et courant transversalement les uns par rapport aux autres, en un fil métallique tendre, caractérisée en ce que l'insert est formé de deux couches (2, 3), se recouvrant mutuellement et disposées transversalement l'une par rapport à l'autre, d'éléments de renforcement présentant des courbures orientées de façon sensiblement parallèle dans la direction opposée à la direction d'extension.

2. Feuille d'étanchéité (1) pour des raccords de toiture, des arêtiers de toiture, des recouvrements de faîtes, de cheminées ou similaires, comportant entre une première et une deuxième couche plastiquement déformables (5), en particulier une couche de dispersion en matière plastique, un insert noyé constitué d'éléments de renforcement se croisant et courant transversalement les uns par rapport aux autres en un fil métallique tendre, caractérisée en ce que les tronçons de fil de l'insert qui courent entre les points de croisement de grille présentent des courbures dans la direction opposée à la direction d'extension des éléments de renforcement (2, 3), de telle sorte que la longueur du tronçon de fil entre deux points de croisement de grille soit supérieure à la distance entre les deux points de croisement de grille et que la feuille puisse en conséquence s'étendre ou se distendre d'au moins 100 %.

3. Feuille selon la revendication 1 ou 2, caractérisée en ce que les tronçons de fil d'armure des éléments de renforcement (2, 3) qui se croisent sont disposés sur les points de croisement de grille en position de superposition lâche.

4. Feuille selon l'une ou plusieurs des revendications précédentes, caractérisée en ce que les tronçons de fil d'armure des éléments de renforcement (2, 3) qui se croisent sont séparés, aux points de croisement de grille par une couche intermédiaire, de la masse (5) plastiquement déformable.

5. Feuille selon l'une ou plusieurs des revendications précédentes, caractérisée en ce que les courbures présentent une structure sensiblement en forme d'onde.

6. Feuille selon l'une ou plusieurs des revendications précédentes, caractérisée en ce que la masse plastiquement déformable (5) est une matière plastique, de préférence une dispersion acrylique présentant une capacité d'extension d'au moins 300 %.

7. Feuille selon l'une ou plusieurs des revendications précédentes, caractérisée en ce que les éléments de renforcement (2, 3) en forme de lignes sont constitués par un fil d'aluminium recuit, de préférence présentant un diamètre de 0,3 à 0,9 mm, plus préférablement 0,85 mm.

8. Feuille selon l'une ou plusieurs des revendications précédentes, caractérisée en ce que l'intervalle de répétition des courbures individuelles correspond sensiblement à l'écartement des éléments de renforcement (2,3).

9. Feuille selon l'une ou plusieurs des revendications précédentes, caractérisée en ce que l'extension transversale de la courbure correspond sensiblement à la moitié de l'extension longitudinale de la courbure.

10. Feuille selon l'une ou plusieurs des revendications précédentes, caractérisée par une structure en sandwich avec les surfaces en matière plastique du produit plat (1) disposées à l'extérieur.

11. Feuille selon l'une ou plusieurs des revendications précédentes, caractérisée en ce que les courbures ou incurvations sont disposées dans le plan du produit plat.

12. Feuille selon l'une ou plusieurs des revendications précédentes, caractérisée en ce que l'épaisseur du produit est de 2 à 3 mm, de préférence 2,3 mm.

13. Procédé de fabrication d'une feuille selon les revendications 1 à 12, caractérisé en ce qu'on applique, par projection sur une sous-couche non adhérente, une couche de dispersion en matière plastique (5) à grande élasticité, couche sur laquelle on applique une première couche d'éléments de renforcement (2) en fil métallique tendre, dans la direction opposée à la direction d'extension, sur laquelle première couche, on applique par projection une deuxième couche de dispersion, et/ou sur laquelle on applique un autre deuxième insert de renforcement en fil métallique tendre, orienté transversalement à la première couche d'insert (2), deuxième couche ou insert qui est recouvert par une autre couche de dispersion en matière plastique.

14. Procédé de fabrication d'une feuille selon la revendication 13, caractérisé en ce que les éléments de renforcement (2, 3) sont disposés en zigzag sur une couche de dispersion en matière plastique, qui est recouverte par une autre couche de dispersion en matière plastique.
